# EUROPÄISCHE PATENTSCHRIFT

(11) **EP 2 769 297 B1**
(45) Veröffentlichungstag und Bekanntmachung des Hinweises auf die Patenterteilung: **08.07.2020**
(21) Anmeldenummer: 12780417.7
(22) Anmeldetag: 16.10.2012
(51) Int. Cl.: G06F 8/61

(54) **DATENLADESYSTEM, TRANSPORTABLES DATENLADEGERÄT UND VERFAHREN FÜR DAS LADEN VON SOFTWAREKONFIGURATIONEN IN LUFTFAHRZEUGE**
DATA LOADING SYSTEM, PORTABLE DATA LOADING DEVICE AND METHOD TO LOAD SOFTWARE CONFIGURATIONS INto AN AIRCRAFT
SYSTÈME DE CHARGEMENT DE DONNÉES, DISPOSITIF DE CHARGEMENT DE DONNÉES PORTABLE ET MÉTHODE POUR CHARGER DES CONFIGURATIONS LOGICIELLES DANS UN AVION

(30) Priorität: 20.10.2011 DE 102011122761
(43) Veröffentlichungstag der Anmeldung: 27.08.2014
(73) Patentinhaber: Lufthansa Technik AG, 22335 Hamburg (DE)
(72) Erfinder: SCHOWALTER, Jörg, 67577 Alsheim (DE); FLIEGNER, Matthias, 60329 Frankfurt (DE)
(74) Vertreter: Müller Verweyen
(86) Internationale Anmeldenummer: PCT/EP2012/004313
(87) Internationale Veröffentlichungsnummer: WO 2013/056810

(56) Entgegenhaltungen:
- EP-A1- 2 063 357
- WO-A1-2010/029250
- US-A1- 2006 229 772

## Beschreibung

Die Erfindung betrifft ein Datenladesystem für das Laden von Softwarekonfigurationen in die elektronischen Komponenten von Luftfahrzeugen, wobei das Datenladesystem ein Datenbanksystem und mindestens ein transportables Datenladegerät umfasst, wobei auf dem Datenbanksystem Softwarekonfigurationen für mindestens eine Flotte von Luftfahrzeugen gespeichert sind. Das Datenladegerät ist dazu eingerichtet, eine von dem Datenbanksystem bezogene zugeordnete Softwarekonfiguration über einen Anschluss in einen Datenbus eines dieser Softwarekonfiguration entsprechenden Luftfahrzeugs zu laden. Die Erfindung betrifft weiter ein entsprechendes Datenladegerät und ein Datenladeverfahren.

In einem modernen Luftfahrzeug ist eine Vielzahl elektronischer Komponenten eingebaut, die zur Erfüllung ihrer jeweiligen Funktion ein in der elektronischen Komponente gespeichertes Programm oder Betriebssystem ausführen. Diese elektronischen Komponenten können beispielsweise Flugkontrollsysteme, Funk- und Radarsysteme sein. Weiterhin sind in Luftfahrzeugen elektronische Komponenten eingebaut, die zur Erfüllung ihrer Aufgabe im Luftfahrzeug neben einem Programm auf eine Vielzahl von Daten zugreifen müssen, wie beispielsweise Navigationssysteme, die regelmäßig mit aktuellen Informationen über Änderungen an Funkfeuern, Flughäfen, usw. aktualisiert werden müssen. Die Mehrzahl der elektronischen Komponenten erfährt daher im Laufe der Nutzungsdauer mindestens eine Softwareaktualisierung, Komponenten, die auf Software mit Informationen aus Datenbanken zugreifen, deutlich häufiger.

Da es für eine Aktualisierung der elektronischen Komponenten unzweckmäßig ist, diese einzeln aus dem Luftfahrzeug zu entfernen und die entsprechenden Änderungen bzw. Aktualisierungen in einer Werkstatt durchzuführen, können diese Komponenten in der Regel im verbauten Zustand mit aktualisierten oder verbesserten Programmen und/oder aktualisierten Datenbankinformationen versorgt werden. Die elektronischen Komponenten eines Luftfahrzeugs sind in der Regel mit einem Datenbus miteinander verbunden, der für das Einladen der Änderungen genutzt werden kann, so dass der Zugriff von außen auf die elektronischen Komponenten nur an einer oder wenigen Stellen im Luftfahrzeug erfolgen muss.

Die Aktualisierungen oder Änderungen von Software für elektronische Komponenten eines Luftfahrzeugs werden dem Betreiber des Luftfahrzeugs oder einer Luftfahrzeugflotte durch den Luftfahrzeughersteller, den Herstellern der einzelnen elektronischen Komponenten oder anderen als Softwarepakete zur Verfügung gestellt.

Eine Zusammenstellung der Softwarepakete für eine Softwareaktualisierung wird durch den Betreiber bzw. Wartungsbetrieb der Luftfahrzeugflotte geplant. Die Softwareaktualisierungen werden für die einzelnen elektronischen Komponenten zusammengestellt, so dass eine neue Softwarekonfiguration für ein Luftfahrzeug erstellt wird. Die Softwarekonfigurationen sind häufig aufgrund eines unterschiedlichen Bauzustands bzw. Überholungs- oder Wartungszustands für jedes Luftfahrzeug, auch des gleichen Musters, unterschiedlich, so dass sich für eine Flotte eine Vielzahl von unterschiedlichen Softwarekonfigurationen ergibt.

Die in ein Luftfahrzeug zu ladenden Softwarekonfigurationen sind aufgrund ihrer Relevanz für die Flugsicherheit äußerst sicherheitskritisch, wodurch eine Freigabe der Softwarekonfigurationen, Nachweisführung und besondere Sorgfalt bei der Versionspflege nötig sind. Weiterhin muss der Betreiber am Boden die aktuellen Softwarekonfigurationen eines im Betrieb befindlichen Luftfahrzeugs aufgrund behördlicher Auflagen jederzeit überprüfen und nachweisen können.

Die verschiedenen aktuellen bzw. geplanten Softwarekonfigurationen werden typischer Weise auf einem Datenbanksystem, z.B. einem Server, des Luftfahrzeugbetreibers oder Wartungsbetriebs gesammelt und vorgehalten. Weiterhin kommen die notwendigen Freigaben zur Benutzung einer bestimmten Softwarekonfiguration für jedes Luftfahrzeug hinzu.

Die Softwarekonfiguration wird nach Erstellung eines Arbeitsauftrags für den Transfer zum Luftfahrzeug vorbereitet. Hierfür werden Datenträger genutzt und für diesen Auftrag mit der entsprechenden Softwarekonfiguration beladen, in der Regel sind dies Disketten, CDs oder andere Datenträger.

Für das Laden der Softwarekonfiguration von Datenträgern in das Luftfahrzeug ist ein Datenladegerät oder auch ein Datenlader erforderlich, welches das oder die entsprechenden Datenträger auslesen und in das Bussystem oder den Datenbus des Luftfahrzeugs übertragen kann. Das Datenladegerät kann hierbei transportabel ausgeführt sein, und so bei unterschiedlichen Luftfahrzeugen genutzt werden, oder fest im Luftfahrzeug als Datenlader installiert sein. Über den Datenbus können die Softwareaktualisierungen als neue Softwarekonfiguration des Luftfahrzeugs an die einzelnen elektronischen Komponenten des Luftfahrzeugs übertragen werden.

Für die Änderung oder Aktualisierung der Softwarekonfiguration des jeweiligen Luftfahrzeugs ist eine Erstellung einer Vielzahl von Datenträgern notwendig, die sehr aufwändig ist. Zudem ist deren Verwaltung, Verteilung und Nachverfolgung ebenfalls sehr aufwändig, da aufgrund der Sicherheitsrelevanz im Flugbetrieb eine besondere Nachweisführung erforderlich ist.

WO 2010/029250 A1 offenbart eine Vorrichtung für ein Flugzeug zur Verwaltung und Speicherung von Daten, die das OnBoard-Equipment betreffen.

EP 2 063 357 A1 offenbart einen transportablen Datenträger und ein Verfahren zum Übertragen von Konfigurationsdaten von einem externen Rechner auf einen Sensor.

Die Aufgabe der Erfindung ist die Bereitstellung einer Vorrichtung und eines korrespondierenden Verfahrens, die ein effizientes und sicheres Laden von Softwarekonfigurationen in Luftfahrzeuge mit verringertem Aufwand ermöglichen.

Diese Aufgabe wird mit den Merkmalen der unabhängigen Ansprüche gelöst. Erfindungsgemäß ist das Datenladegerät dazu eingerichtet, an einer bodenfesten Lagerposition über eine Datenverbindung die aktuellen individuellen Softwarekonfigurationen sämtlicher Luftfahrzeuge mindestens einer Flotte vom Datenbanksystem zu laden und auf dem Datenladegerät zu speichern (ohne Medienbrüche).

Das Datenladesystem umfasst ein transportables Datenladegerät, das über die aktuellen Softwarekonfigurationen einer Vielzahl von Luftfahrzeugen verfügt, und für das Laden von neuen Softwarekonfigurationen in das Luftfahrzeug befördert und dort an den Datenbus des Luftfahrzeugs angeschlossen wird. Ein Bediener des Datenladegerätes wählt die entsprechende Softwarekonfiguration für dieses Luftfahrzeug aus und startet den Ladevorgang, so dass alle von der Aktualisierung betroffenen elektronischen Komponenten ohne Einlegen oder Wechseln von Datenträgern in das Datenladegerät aktualisiert werden können.

Das erfindungsgemäße Datenladesystem/-verfahren ist vorteilhaft, weil die Erstellung, Verteilung und Verwaltung der Datenträger entfällt. Die Gefahr von menschlichen Fehlern beim Aktualisierungsvorgang wird verringert. Weiterhin beschleunigt sich der komplette Ladevorgang unter anderem durch den Wegfall der Wechsel von Datenträgern, so dass die notwendigen Arbeitszeiten für den Ladevorgang deutlich reduziert werden. Fehler durch defekte Datenträger werden zudem ausgeschlossen.

Weiterhin ist das erfindungsgemäße Datenladesystem vorteilhaft, weil hierdurch ein geschlossenes Datenladesystem entsteht, das die Gefahr von Bedienfehlern beim Ladevorgang und in der Arbeitsvorbereitung reduziert. Die gesamte Arbeitsvorbereitung vereinfacht sich, weil das Erstellen und Verwalten von Datenträgern entfällt.

Erfindungsgemäß ist die über den Anschluss in den Datenbus eines Luftfahrzeugs zu ladende jeweilige Softwarekonfiguration über eine Benutzeroberfläche des Datenladegeräts von einem Bediener auswählbar. Der Bediener kann auf diese Weise sehr einfach die im Arbeitsauftrag vorgegebene Softwarekonfiguration über ein bildschirmgeführtes Menü auswählen. Eine Auswahl entsprechender Datenträger und die Einhaltung der Reihenfolge beim Einlegen und Wechseln der Datenträger in ein übliches Datenladegerät entfallen.

Das Datenladegerät des Datenladesystems ist vorzugsweise dazu eingerichtet, ein Luftfahrzeug zu identifizieren, wenn es an einen Datenbus dieses Luftfahrzeugs angeschlossen ist. Hierdurch kann einem Bediener die entsprechende Softwarekonfiguration vorgeschlagen werden, wodurch Fehler des Bedieners bei der Auswahl der Softwarekonfiguration verringert werden können. Es entsteht eine zusätzliche Kontrollmöglichkeit, die die Sicherheit erhöht.

In einer nicht unter die Erfindung fallenden Ausführungsform kann das Datenladegerät dazu eingerichtet sein, nach einem Anschluss an einen Datenbus eines Luftfahrzeugs automatisch die entsprechende Softwarekonfiguration für dieses Luftfahrzeug in die elektronischen Komponenten dieses Luftfahrzeugs zu laden. Nach Anschluss an das Luftfahrzeug erkennt das Datenladegerät den Anschluss an einen Datenbus und identifiziert das entsprechende Luftfahrzeug. Ist auf dem Datenladegerät eine neuere Version verfügbar, wird diese automatisch in das Luftfahrzeug geladen. Dies beschleunigt den Aktualisierungsvorgang und vereinfacht die Handhabung für den Bediener. Die Erfindung ist aber darauf nicht beschränkt, sondern umfasst beispielsweise auch eine manuelle Eingabe der Kennung.

In einer vorteilhaften Ausführungsform ist das Datenladegerät dazu eingerichtet, in der Lagerposition eine automatische Rückmeldung über durchgeführte Ladevorgänge von Softwarekonfigurationen an das Datenbanksystem zu übertragen. Die manuelle Rückmeldung des Bedieners durch eine unterschriebene Arbeitskarte oder einen unterschriebenen Arbeitsauftrag an die Konfigurationsüberwachung der Luftfahrzeugflotte wird durch ein digitales Protokoll zusätzlich abgesichert. Hierdurch können die tatsächlich übertragenen Daten digital nachgewiesen werden, z.B. durch eine Duplizierung der übertragenen Daten. Der Datentransfer einer Softwarekonfiguration von dem Datenbanksystem auf ein Luftfahrzeug ist auf diese Weise nach der Freigabe der Softwarekonfiguration durch eine Planungseinrichtung ein geschlossener Prozess, der den Faktor Mensch als Fehlerquelle weitgehend ausschließt. Weiterhin wird es möglich Softwareaktualisierungen von einer großen Anzahl einzelner elektronischer Komponenten eines Luftfahrzeugs effizient nachzuweisen, was für moderne Luftfahrzeuge mit einer steigenden Zahl elektronischer Komponenten zunehmend an Bedeutung gewinnt.

Vorzugsweise ist das Datenladegerät dazu eingerichtet, das Laden der aktuellen individuellen Softwarekonfigurationen sämtlicher Luftfahrzeuge mindestens einer Flotte vom Datenbanksystem über die Datenverbindung periodisch durchzuführen. Dies ist vorteilhaft, weil ein Datenladegerät des Datenladesystems auf diese Weise ohne manuellen Eingriff über die neuesten, verfügbaren Softwarekonfigurationen verfügt, so dass für jedes Luftfahrzeug der Flotte die Softwarekonfiguration für eine geplante Softwareaktualisierung vorliegt. Weiterhin kann auf diese Weise eine Vielzahl von Datenladegeräten im Datenladesystem genutzt werden, da alle Datenladegeräte ohne weiteren manuellen Eingriff mit den jeweils aktuellen Softwarekonfigurationen für alle Luftfahrzeuge der betreuten Flotte ausgestattet sind.

Vorzugsweise ist das Intervall zum periodischen Laden der aktuellen individuellen Softwarekonfigurationen sämtlicher Luftfahrzeuge der Flotte vom Datenbanksystem einstellbar. Das Intervall wird vorteilhafter Weise so gewählt, dass eine freigegebene Softwarekonfiguration rechtzeitig vor dem Ausführen der Wartungsarbeiten und somit vor der Entnahme des Datenladegerätes aus der Lagerposition erfolgt. Typischer Weise wird ein Intervall zwischen zehn Sekunden und einer Stunde gewählt.

Das Datenladesystem umfasst in einer vorteilhaften Ausführungsform nur Kabelverbindungen zur Datenübertragung zwischen Datenbanksystem und Datenladegerät und zwischen Datenladegerät und Luftfahrzeug. Eine Kabelverbindung zeichnet sich gegenüber kabellosen Datenübertragungen durch eine höhere Datentransferrate aus. Von besonderer Bedeutung aufgrund der sicherheitstechnischen Bewandtnis der Softwarekonfigurationen für die Flugsicherheit erlauben Kabelverbindungen ein geschlossenes Datenladesystem, das nicht von außen durch Dritte ohne physischen Zugriff gestört, manipuliert oder abgehört werden kann. Dies ist besonders vorteilhaft gegenüber funkgestützten Datenübertragungen, die deutlich leichter von Unberechtigten infiltriert werden können, da hier kein physischer bzw. mechanischer Zugriff auf das Datenladesystem, das Datenladegerät oder das Luftfahrzeug notwendig ist.

In einer weiteren vorteilhaften Ausführungsform ist das Datenladesystem dazu eingerichtet, eine Softwarekonfiguration von dem transportablen Datenladegerät über eine Verbindung durch einen in einem Luftfahrzeug installierten Datenlader in einen Datenbus dieses Luftfahrzeugs zu übertragen. Einige Luftfahrzeuge verfügen über einen fest installierten Datenlader, über den Softwarekonfigurationen in das Bussystem des Luftfahrzeugs übertragen werden können. Diese installierten Datenlader sind immer an Bord des Luftfahrzeugs und werden zum Laden von Softwarekonfigurationen von Datenträgern genutzt. Sie sind zwar bei der Verwendung von mobilen Datenladegeräten nicht mehr unbedingt erforderlich, werden jedoch nicht in jedem Fall aus dem Luftfahrzeug ausgebaut. Die Übertragung der Softwarekonfiguration mit dem Datenladesystem kann in einem solchen Fall an den fest installierten Datenladern vorbei erfolgen. Aus Sicht der Effizienz kann ein an Bord fest installierter Datenlader entfernt werden, da dieser durch das Laden mittels eines mobilen Datenladers überflüssig werden kann. Durch die Gewichtseinsparung können ggf. Treibstoffkosten eingespart und die CO₂ Emissionen reduziert werden.

Beispielsweise, wenn das Luftfahrzeug einen fest installierten Datenlader aufweist und keine unabhängigen Anschlüsse an einen Datenbus des Luftfahrzeugs verwendet werden, kann es vorteilhaft sein, die Softwarekonfiguration vom transportablen Datenladegerät des erfindungsgemäßen Datenladesystems zunächst in den fest installierten Datenlader zu übertragen, oder die Softwarekonfiguration über den fest installierten Datenlader in das Luftfahrzeug zu laden. Die erfindungsgemäßen Vorteile des Datenladesystems bleiben in diesem Fall erhalten.

Das Datenladesystem umfasst vorteilhafter Weise ein bodenseitiges Softwaremanagementsystem für das Datenbanksystem, das eine elektronische Konfigurationskontrolle der Softwarekonfigurationen von Luftfahrzeugen ermöglicht, so dass die Erfassung, Überwachung und Nachweisführung der Softwarekonfigurationen der Luftfahrzeuge mindestens einer Flotte durch das Datenladesystem erfolgen kann. Die elektronische Konfigurationskontrolle durch das Softwaremanagementsystem des Datenladesystems ist durch die einfachere Handhabung und den hohen, möglichen Automatisierungsgrad deutlich unanfälliger für Fehler als manuell geführte Listen, Aufzeichnungen und Datenbanken.

Weiterhin wird die Aufgabe der Erfindung durch ein transportables Datenladegerät für das Laden von Softwarekonfigurationen in die elektronischen Komponenten von Luftfahrzeugen gelöst, das dazu eingerichtet ist, eine von einem Datenbanksystem bezogene zugeordnete Softwarekonfiguration über einen Anschluss in einen Datenbus eines dieser Softwarekonfiguration entsprechenden Luftfahrzeugs zu laden. Erfindungsgemäß ist das transportable Datenladegerät eingerichtet, an einer bodenfesten Lagerposition über eine Datenverbindung die aktuellen individuellen Softwarekonfigurationen sämtlicher Luftfahrzeuge mindestens einer Flotte von dem Datenbanksystem zu laden und auf dem transportablen Datenladegerät zu speichern. Das erfindungsgemäße transportable Datenladegerät geht in seiner Funktion deutlich über die reine Ladefunktionalität von Daten in ein Luftfahrzeug hinaus und ermöglicht einen vereinfachten, schnelleren und besser kontrollierbaren Datenladevorgang von Softwarekonfigurationen für Luftfahrzeuge, was sich vorteilhaft auf die Wartungskosten und die Luftfahrtsicherheit auswirkt.

Die Aufgabe der Erfindung wird weiterhin durch ein Verfahren nach den Merkmalen des letzten Anspruchs gelöst. Erfindungsgemäß lädt das Datenladegerät an einer bodenfesten Lagerposition über eine Datenverbindung die aktuellen individuellen Softwarekonfigurationen sämtlicher Luftfahrzeuge mindestens einer Flotte vom Datenbanksystem und speichert diese auf dem Datenladegerät. Das erfindungsgemäße Verfahren vereinfacht und beschleunigt das Laden von Softwarekonfigurationen und verbessert die Betriebssicherheit von Luftfahrzeugen.

Die Erfindung wird im Folgenden anhand bevorzugter Ausführungsformen unter Bezugnahme auf die beigefügten Figuren erläutert. Dabei zeigt:
- Fig. 1: eine schematische Darstellung des Datenladesystems mit einem Datenladegerät in der Lagerposition;
- Fig. 2: eine schematische Darstellung des Datenladesystems mit einem Datenladegerät mit Anschluss an ein Luftfahrzeug; und
- Fig. 3: eine schematische Darstellung des Datenladesystems mit einem Datenladegerät mit Anschluss an ein Luftfahrzeug über einen Datenlader.

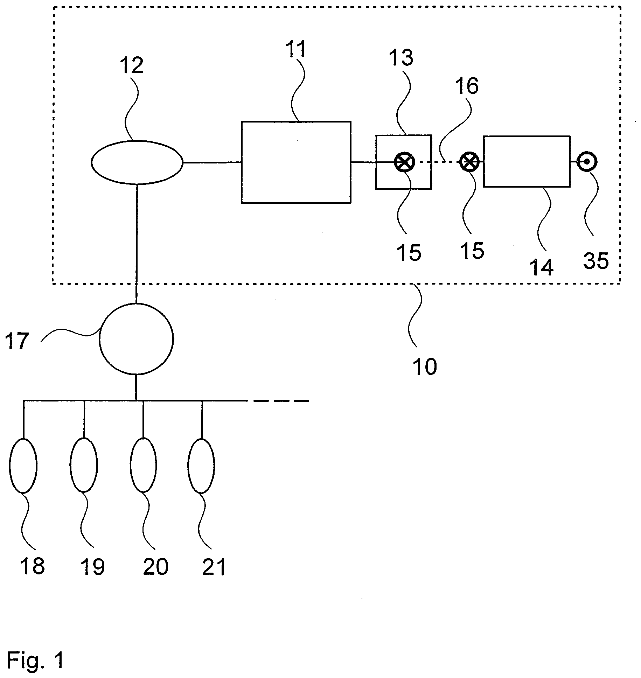

Fig. 1 zeigt ein Ausführungsbeispiel eines Datenladesystems 10 mit einem Datenbanksystem 11, wobei das Datenbanksystem 11 Verbindung zu mindestens einer Lagerposition 13 für ein transportables Datenladegerät 14 aufweist. Das transportable Datenladegerät 14 ist über die Datenladeanschlüsse 15 durch eine kabelgebundene Datenverbindung 16 mit der Lagerposition 13 und somit mit dem Datenbanksystem 11 verbunden.

Eine Softwarekonfiguration 12 wird durch eine Planungseinrichtung 17 aus einzelnen oder kombinierten Softwarepaketen 18,19,20,21,... zusammengestellt, geplant und für einen Datentransfer auf ein Luftfahrzeug 30 freigegeben. Die Planungseinrichtung 17 ist dabei die für die Wartung und/oder Betriebssicherheit des Luftfahrzeugs 30 verantwortliche Stelle, die z.B. aus einem Wartungsingenieur bestehen kann. In der Planungsstelle 17 können die Wartungsvorgänge des Luftfahrzeugs 30 insgesamt auch geplant werden. Hier kann ebenfalls die Freigabe einer Softwarekonfiguration 12 erfolgen, die aus luftverkehrsrechtlicher Sicht von besonderer Bedeutung ist. Die Planungsstelle 17 kann in einem möglichen Ausführungsbeispiel ein bodenseitiges Softwaremanagementsystem für das Datenbanksystem 11 verwenden.

Die Zusammenstellung der Softwarekonfiguration 12 erfolgt aus einzelnen Softwarepaketen 18,19,20,21,... für die verschiedenen elektronischen Komponenten 38,39,40,41,... eines Luftfahrzeugs 30, die von den jeweiligen Herstellern oder Dienstleistern zur Verfügung gestellt werden. Dies teilt sich auf in Aktualisierungen oder Updates von Betriebssoftware von z.B. Flugsteuerung oder Autopilot, und Datenbankinformationen, wie z.B. Karten, Funkfrequenzen und Anflugverfahren von Flughäfen.

Die Softwarepakete 18,19,20,21,... sind auf die Anzahl der im Luftfahrzeug 30 eingesetzten elektronischen Komponenten 38,39,40,41,..., die mit aktualisierten Softwarepaketen 18,19,20,21,... über den Datenbus 33 geladen werden können, beschränkt. Bei einer Softwareaktualisierung ist jedoch eine Aktualisierung aller möglichen elektronischen Komponenten nicht zwingend erforderlich.

Die Lagerposition 13 für ein transportables Datenladegerät 14 ist eine bodenfeste Position oder ein Bereich, der über einen entsprechenden Platz zum Ablegen des transportablen Datenladegeräts 14 und einen Datenladeanschluss 15 verfügt. Typischer Weise ist die Lagerposition 13 im Bereich der Betriebsmittelausgabe für die Wartung und Instandhaltung der Luftfahrzeuge angeordnet. Neben einem Datenladeanschluss 15 kann in der Lagerposition 13 eine Vorrichtung zum Laden der Stromspeicher des Datenladegeräts 14 vorgesehen sein. Das Datenladesystem 10 ist nicht auf eine Lagerposition 13 beschränkt, es können eine Vielzahl von Lagerpositionen 13 genutzt werden, die auch auf mehrere Wartungsstandorte verteilt sein können. Typischer Weise sind die Wartungsstandorte an Flughäfen. Vorzugsweise sind alle Lagerpositionen 13 mit dem gleichen Datenbanksystem 11 des Datenladesystems 10 verbunden, die Verbindung kann bei besonderen Erfordernissen auch über Zwischenstationen erfolgen. Die verteilten Lagerpositionen 13 können eine weltweite und kurzfristige Aktualisierung der Softwarekonfigurationen 12 der Luftfahrzeuge 30 mindestens einer Flotte ermöglichen. Eine Aktualisierung von in einem Luftfahrzeug 30 gespeicherten Datenbankinformationen ist beispielsweise für bestimmte Software-Varianten alle 28 Tage vorgeschrieben.

Das Datenbanksystem 11 umfasst in einer typischen Ausführungsform einen zentralen Server, auf dem alle aktuellen bzw. geplanten, individuellen Softwarekonfigurationen 12 für mindestens eine betreute Flotte von Luftfahrzeugen 30 gespeichert werden können. Das Datenbanksystem 11 verwaltet, sichert und regelt den Zugriff auf die Softwarekonfigurationen 12.

Das Datenladegerät 14 ist ein transportables Datenladegerät 14, das über einen ausreichend dimensionierten Datenspeicher verfügt und über eine Datenverbindung 16 in einer Lagerposition 13 Softwarekonfigurationen 12 für eine Vielzahl von Luftfahrzeugen 30 laden und abspeichern kann. Das Datenladegerät 14 verfügt über einen Bildschirm und Eingabegeräte für einen Bediener, wie z.B. Tastatur, Maus, Touchpad oder Touchscreen.

Die Datenverbindung 16 an das Datenbanksystem 11 über die Lagerposition 13 kann beispielsweise über Ethernet und ein geeignetes Datentransferprotokoll erfolgen. Die Datenladeanschlüsse 15 können Standardanschlussdosen für Datenkabel sein. Weiterhin ist es möglich, dass beispielsweise ein Datenkabel dauerhaft mit dem Anschluss 15 in der Lagerposition 13 verbunden ist.

In einem typischen Ladevorgang mit dem Datenladesystem 10 werden die einzelnen Softwarepakete 18,19,20,21,... bzw. Software-und/oder Datenbankupdates zu unterschiedlichen Zeitpunkten dem Betreiber und/oder Wartungsbetrieb einer Flotte von Luftfahrzeugen 30 zur Verfügung gestellt. Ein zuständiger Planungsingenieur in der Planungseinrichtung 17 wählt die entsprechenden Softwarepakete 18,19,20,21,... für ein bestimmtes Luftfahrzeug 30 aus, die Auswahl erfolgt auf Basis der individuellen Konfiguration der elektronischen Komponenten 38,39,40,41,... in diesem Luftfahrzeug 30 und dem entsprechenden Bauzustand des Luftfahrzeugs 30, z.B. anhand der elektronischen Komponenten 38,39,40,41,... bzw. der Versionen der verschiedenen elektronischen Komponenten 38,39,40,41,..., die im Luftfahrzeug 30 verbaut sind. Die Zusammenstellung der Softwarekonfiguration 12 erfolgt für eine Softwareaktualisierung im Rahmen eines planmäßigen oder unplanmäßigen Wartungsintervalls. Nach einer Zusammenstellung, Prüfung und Freigabe für einen Transfer in das entsprechende Luftfahrzeug 30 wird die Softwarekonfiguration 12 auf dem Datenbanksystem 11 des Datenladesystems 10 zur Verfügung gestellt. Die Softwarekonfiguration 12, die in das Luftfahrzeug 30 zu laden ist, ist somit festgelegt und zentral auf dem Datenbanksystem 11 verfügbar.

Ein Datenladegerät 14 ist an einer Lagerposition 13 mit dem Datenbanksystem 11 verbunden, lädt vorzugsweise periodisch in einem Aktualisierungsintervall die neu zur Verfügung gestellte Softwarekonfiguration 12 herunter und speichert diese auf seinem Speichermedium. Das Intervall zum Laden der aktuellen individuellen Softwarekonfigurationen 12 kann beliebig gewählt werden, vorteilhaft ist jedoch ein Intervall, das nach einer Freigabe einer Softwarekonfiguration 12 eine ausreichend schnelle Aktualisierung des Datenladegeräts 14 ermöglicht, typischer Weise würde eine Aktualisierung jede Stunde ausreichen, in besonderen Fällen kann es jedoch vorteilhaft sein, ein kürzeres Intervall, beispielsweise jede Minute, zu wählen. In einer alternativen Ausführungsform ist es möglich, eine Aktualisierung manuell auszulösen, um nicht in jedem Fall auf das eingestellte Intervall warten zu müssen.

Für geplante Wartungsarbeiten an einem Luftfahrzeug wird das entsprechende Luftfahrzeug 30 für die entsprechenden Wartungszeiten aus dem Betrieb genommen. Die geplanten Wartungsarbeiten werden durch einzelne Arbeitsaufträge an die Wartungstechniker vergeben. Dies gilt auch für den Wartungstechniker, der Bediener des Datenladegerätes 14 ist. Der Bediener erhält dann in der Regel den Arbeitsauftrag, eine Aktualisierung der Softwarekonfiguration 12 des Luftfahrzeugs 30 durchzuführen, und beschafft sich als angegebenes Arbeitsmittel lediglich das Datenladegerät 14, welches er in das Luftfahrzeug 30 transportiert und an der entsprechenden Anschlussstelle 35 anschließt.

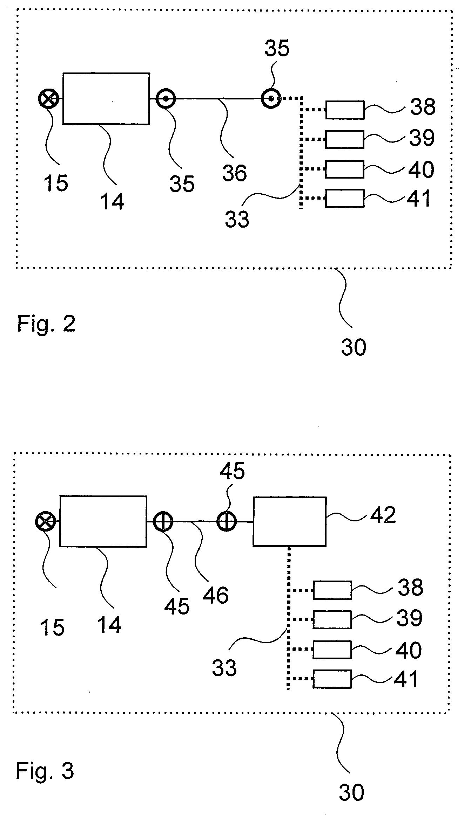

Fig. 2 zeigt das Datenladegerät 14 nach dem Transport in das Luftfahrzeug 30. Das Datenladegerät 14 ist mit dem Datenbus 33 des Luftfahrzeugs 30 über eine kabelgebundene Datenbusverbindung 36 zwischen den Datenbusanschlüssen bzw. Anschlussstellen 35 verbunden. Vorteilhaft ist ein Betrieb des Datenladegerätes 14 mit einem internen Energiespeicher, der einen von externen Stromquellen unabhängigen Betrieb beim Ladevorgang in die Elektronik des Luftfahrzeugs 30 ermöglicht. In einer alternativen Ausführungsform kann das Datenladegerät 14 mit einer externen Stromquelle betrieben werden.

In einer erfindungsgemäßen Ausführungsform wählt der Bediener die vorgegebene Softwarekonfiguration 12 für dieses Luftfahrzeug 30 auf Grundlage des Arbeitsauftrages aus und startet die Datenübertragung der Softwarekonfiguration 12 in den Datenbus 33 des Luftfahrzeugs 30. Dadurch erhalten die einzelnen elektronischen Komponenten 38,39,40,41,..., wie z.B. Flugsteuerungsgerät, Autopilot, Navigations- und Funkgeräte, ihre aktualisierte, neueste Softwareversion und/oder Datenbankaktualisierung bzw. ihr aktualisiertes Softwarepaket 18,19,20,21,... .

In einer alternativen Ausführungsform identifiziert das Datenladegerät 14 das Luftfahrzeug 30 nach dem Anschluss an den Datenbus 33 und schlägt dem Bediener die entsprechende Softwarekonfiguration 12 zum Laden in die Elektronik bzw. elektronischen Komponenten 38,39,40,41,... des Luftfahrzeugs 30 vor. Der Bediener gleicht diese Softwarekonfiguration 12 mit seinem Arbeitsauftrag ab, und startet den Ladevorgang der Softwarekonfiguration 12 in die verschiedenen elektronischen Komponenten 38,39,40,41,... des Luftfahrzeugs 30.

Die elektronischen Komponenten 38,39,40,41,... eines Luftfahrzeuges umfassen die rein elektronischen Systeme, sowie auch die mechanischen, hydraulischen, pneumatischen oder elektrischen Systeme im Luftfahrzeug 30, die über eine elektronische Komponente z.B. zur Steuerung oder Datenerfassung verfügen und mittels eines Datenbusses 33 kommunikationsfähig sind.

In einer nicht unter die Erfindung fallenden Ausführungsform erkennt das Datenladegerät 14 das Luftfahrzeug 30 nach dem Anschluss an den Datenbus 33 und startet automatisch den Transfer der Softwarekonfiguration 12. In dieser Ausführungsform ist es vorteilhaft, wenn das Datenladegerät 14 vor dem Transfer auf das Luftfahrzeug 30 überprüft, ob das Datenladegerät 14 über eine neuere Softwarekonfiguration 12 als das Luftfahrzeug 30 verfügt.

In einer vorteilhaften Ausführungsform protokolliert das Datenladegerät 14 den Datentransfer der Softwarekonfiguration 12 und speichert dieses Protokoll für eine Rückmeldung über den erfolgten Datentransfer an das Datenbanksystem 11 ab. Zusätzlich kann ein komplettes Abbild der transferierten Softwarekonfiguration 12 auf dem Datenladegerät 14 gespeichert sein.

Das Datenladegerät 14 meldet nach dem Datentransfer dem Bediener den Erfolg der Aktualisierung bzw. zeigt aufgetretene Fehler in geeigneter Weise an. Der Bediener unterschreibt bzw. quittiert den Erfolg auf seinem Arbeitsauftrag und entfernt das Datenladegerät 14 aus dem Luftfahrzeug 30.

Der erfüllte Arbeitsauftrag wird der zuständigen Konfigurationskontrollstelle zugeführt und der Bediener des Datenladegerätes 14 gibt sein Betriebsmittel, das Datenladegerät 14, beispielsweise an der Werkzeugausgabe ab, wo es wieder an der Lagerposition 13 angeschlossen wird.

Das Datenladegerät 14 kann somit beim nächsten Intervall wieder mit einer weiteren, neuen Softwarekonfiguration 12 beladen werden. Der Ladevorgang mit dem Datenladesystem 10 ist damit abgeschlossen.

In einer vorteilhaften Ausführungsform werden die Protokolle von Übertragungen der Softwarekonfiguration 12 seit dem letzten Anschluss an der Lagerposition 13 auf das Datenbanksystem 11 übertragen, und können dort mit eingegebenen Daten aus dem Arbeitsauftrag verglichen werden.

In einer weiteren vorteilhaften Ausführungsform werden das Protokoll der Übertragung einer Softwarekonfiguration 12 und/oder ein Abbild der übertragenen Softwarekonfiguration 12 auf das Datenbanksystem 11 des Datenladesystems 10 geladen und für eine elektronisch gestützte Konfigurationskontrolle der Softwarekonfigurationen 12 einer Luftfahrzeugflotte genutzt, was eine sehr effiziente und detaillierte Konfigurationskontrolle ermöglicht. Bei modernen Luftfahrzeugmustern mit einer wachsenden Anzahl und Komplexität von elektronischen Komponenten 38,39,40,41,... ist dies besonders vorteilhaft gegenüber einer manuellen Transferbestätigung für jede einzelne der elektronischen Komponenten 38,39,40,41,.... Die Konfigurationskontrolle kann in einer möglichen Ausführungsform vorteilhaft mit einer Softwareapplikation im Datenbanksystem 11 erfolgen, so dass jederzeit nachweisbar und überprüfbar ist, welche Softwarekonfiguration 12 sich auf einem Luftfahrzeug 30 einer Flotte befindet. Eine detaillierte, manuelle Eintragung von übertragenen bzw. geladenen Softwarekonfigurationen 12 bestehend aus einer Vielzahl von Softwarepaketen 18,19,20,21,... von einem Arbeitsauftrag in eine gesonderte Datenbank kann somit entfallen. Ein Nachweis durch den Arbeitsauftrag über die generelle Übertragung einer bestimmten Softwarekonfiguration 12 ist hingegen zweckdienlich, um Probleme durch einen Ausfall eines Datenladegerätes 14 nach einer Übertragung oder einen stark verzögerten Rücktransfer des Datenladegerätes 14 in die Lagerposition 13 zu vermeiden.

Alternativ kann es zur Erfüllung des Arbeitsauftrags gehören, das Datenladegerät 14 an der Lagerposition 13 wieder anzuschließen. Zudem ist es weiterhin möglich, nach einem Anschluss an der Lagerposition 13 das Übertragungsprotokoll am Datenladegerät 14 durch den Bediener zu bestätigen. Hierdurch kann die eindeutige Nachweisführung zusätzlich verbessert werden.

In einem möglichen Ausführungsbeispiel sind alle aktuellen individuellen Softwarekonfigurationen 12, die für eine Übertragung in ein Luftfahrzeug 30 freigegeben wurden, auf dem oder den Datenladegeräten 14 gespeichert, wie sie auch auf dem Datenbanksystem 11 hinterlegt sind. Daher würde auf einem Datenladegerät 14 für jedes Luftfahrzeug 30 einer Flotte mindestens eine Softwarekonfiguration 12 unabhängig davon gespeichert sein, ob diese Softwarekonfiguration 12 bereits auf das entsprechende Luftfahrzeug 30 geladen wurde.

In einem alternativen Ausführungsbeispiel kann die aktuelle individuelle Softwarekonfiguration 12 als die Softwarekonfiguration 12 angesehen werden, die freigegeben, aber noch nicht auf das entsprechende Luftfahrzeug 30 übertragen wurde. Die Softwarekonfiguration 12, die bereits auf ein vorgesehenes Luftfahrzeug 30 übertragen wurde, könnte somit von allen Datenladegeräten 14 des Datenladesystems 10 gelöscht werden, sobald die Übertragung auf das jeweilige Luftfahrzeug 30 durch ein elektronisches Übertragungsprotokoll und/oder einen bestätigten Arbeitsauftrag bestätigt wurde. Hierdurch könnte der benötigte Speicherplatz auf dem Speichermedium des Datenladegerätes 14 stark reduziert werden, was insbesondere bei einer großen Flotte von Luftfahrzeugen 30 vorteilhaft ist.

In einem möglichen Ausführungsbeispiel weist das Datenladesystem 10 eine Softwareapplikation zum Einspielen und Verteilen der zu ladenden Softwarekonfiguration 12 bzw. Software direkt auf das Datenladegerät 14 ohne weitere Medienbrüche auf.

Eine Flotte von Luftfahrzeugen 30 kann hierbei die Flotte einer Fluggesellschaft, oder ein Teil dieser Flotte sein, oder eine Flotte von einem Wartungsbetrieb betreuter Luftfahrzeuge 30 sein. Weiterhin kann als Flotte auch nur eine Teilflotte bestehend aus einem Luftfahrzeugmuster einer Fluggesellschaft angesehen werden.

Fig. 3 zeigt ein alternatives Ausführungsbeispiel für das Laden einer Softwarekonfiguration 12 in die elektronischen Komponenten 38,39,40,41,... eines Luftfahrzeugs 30. Das Luftfahrzeug 30 verfügt in diesem Ausführungsbeispiel über einen fest installierten Datenlader 42, der in diesem Fall für das Übertragen der Softwarekonfiguration 12 in den Datenbus 33 genutzt werden soll. Das Datenladegerät 14 wird nach dem Transport in das Luftfahrzeug 30 über die Transferanschlüsse 45 durch eine Datentransferverbindung 46 mit dem Datenlader 42 verbunden. Die Übertragung der verschiedenen Softwarepakete 18,19,20,21,... der Softwarekonfiguration 12 erfolgt dadurch über den Datenlader 42 in die verschiedenen elektronischen Komponenten 38,39,40,41,... des Luftfahrzeugs 30. Hierdurch kann die Funktionalität eines fest installierten Datenladers 42 mit einem vorhandenen Anschluss an den Datenbus 33 des Luftfahrzeugs 30 mit den erfindungsgemäßen Vorteilen des Datenladesystems 10 genutzt werden. Dies ist sinnvoll, sofern beispielsweise kein weiterer Anschluss an den Datenbus 33 des Luftfahrzeugs 30 einfach zugänglich ist.

## Patentansprüche

1. Luftfahrzeug (30) und Datenladesystem (10) für das Laden von Softwarekonfigurationen (12) in die elektronischen Komponenten (38,39,40,41,...) von Luftfahrzeugen (30), wobei das Datenladesystem (10) ein Datenbanksystem (11), eine bodenfeste Lagerposition (13) und mindestens ein transportables Datenladegerät (14) umfasst, wobei auf dem Datenbanksystem (11) Softwarekonfigurationen (12) für mindestens eine Flotte von entsprechenden Luftfahrzeugen (30) gespeichert sind, wobei das Datenladegerät (14) dazu eingerichtet ist, eine von dem Datenbanksystem (11) bezogene zugeordnete Softwarekonfiguration (12) über einen Anschluss in einen Datenbus (33) eines dieser Softwarekonfiguration (12) entsprechenden Luftfahrzeugs (30) zu laden, **dadurch gekennzeichnet, dass** das Datenladegerät (14) eingerichtet ist, an einer bodenfesten Lagerposition (13) über eine Datenverbindung (16) die aktuellen individuellen Softwarekonfigurationen (12) sämtlicher Luftfahrzeuge (30) der Flotte vom Datenbanksystem (11) zu laden und auf dem Datenladegerät (14) zu speichern, wobei das Datenladegerät (14) über einen Bildschirm und Eingabegeräte für einen Bediener verfügt, wobei das Datenladegerät (14) mit dem Datenbus (33) des Luftfahrzeugs (30) über eine kabelgebundene Datenbusverbindung (36) verbindbar ist, wobei die über den Anschluss in den Datenbus (33) eines Luftfahrzeugs (30) zu ladende jeweilige Softwarekonfiguration (12) über eine Benutzeroberfläche des Datenladegeräts (14) von einem Bediener auswählbar ist, wobei die Datenübertragung durch den Bediener startbar ist.

2. Luftfahrzeug (30) und Datenladesystem (10) nach Anspruch 1, **dadurch gekennzeichnet, dass** das Datenladegerät (14) dazu eingerichtet ist, ein Luftfahrzeug (30) zu identifizieren, wenn es an einen Datenbus (33) dieses Luftfahrzeugs (30) angeschlossen ist.

3. Luftfahrzeug (30) und Datenladesystem (10) nach einem der vorangehenden Ansprüche, **dadurch gekennzeichnet, dass** das Datenladegerät (14) dazu eingerichtet ist, in der Lagerposition (13) eine automatische Rückmeldung über durchgeführte Ladevorgänge von Softwarekonfigurationen (12) an das Datenbanksystem (11) zu übertragen.

4. Luftfahrzeug (30) und Datenladesystem (10) nach einem der vorangehenden Ansprüche, **dadurch gekennzeichnet, dass** das Datenladegerät (14) eingerichtet ist, die Ladung der aktuellen individuellen Softwarekonfigurationen (12) sämtlicher Luftfahrzeuge (30) der Flotte vom Datenbanksystem (11) über die Datenverbindung (16) periodisch durchzuführen.

5. Luftfahrzeug (30) und Datenladesystem (10) nach Anspruch 4, **dadurch gekennzeichnet, dass** das Intervall zum Laden der aktuellen individuellen Softwarekonfigurationen (12) sämtlicher Luftfahrzeuge (30) der Flotte einstellbar ist.

6. Luftfahrzeug (30) und Datenladesystem (10) nach einem der vorangehenden Ansprüche, **dadurch gekennzeichnet, dass** sämtliche Datenverbindungen (16) bzw. Datenbusverbindungen (36) zwischen Datenbanksystem (11), Datenladegerät (14) und Datenbus (33) des Luftfahrzeugs (30) als Kabelverbindungen ausgebildet sind.

7. Luftfahrzeug (30) und Datenladesystem (10) nach einem der vorangehenden Ansprüche, **dadurch gekennzeichnet, dass** das Datenladesystem (10) dazu eingerichtet ist, eine Softwarekonfiguration (12) von dem transportablen Datenladegerät (14) über eine Datentransferverbindung (46) durch einen in einem Luftfahrzeug (30) installierten Datenlader (42) in einen Datenbus (33) dieses Luftfahrzeugs (30) zu übertragen.

8. Luftfahrzeug (30) und Datenladesystem (10) nach einem der vorangehenden Ansprüche, **dadurch gekennzeichnet, dass** ein bodenseitiges Softwaremanagementsystem für das Datenbanksystem (11) eine elektronische Konfigurationskontrolle der Softwarekonfiguration (12) von Luftfahrzeugen (30) umfasst.

9. Datenladeverfahren für das Laden von Softwarekonfigurationen (12) in die elektronischen Komponenten (38,39,40,41,...) von Luftfahrzeugen (30) unter Verwendung eines Luftfahrzeugs (30) und eines Datenladesystems (10) nach den vorherigen Ansprüchen, wobei auf dem Datenbanksystem (11) Softwarekonfigurationen (12) für mindestens eine Flotte von Luftfahrzeugen (30) gespeichert sind, und das Datenladegerät (14) eine von dem Datenbanksystem (11) bezogene zugeordnete Softwarekonfiguration (12) über einen Anschluss in einen Datenbus (33) eines dieser Softwarekonfiguration (12) entsprechenden Luftfahrzeugs (30) lädt, **dadurch gekennzeichnet, dass** das Datenladegerät (14) an einer bodenfesten Lagerposition (13) über eine Datenverbindung (16) die aktuellen individuellen Softwarekonfigurationen (12) sämtlicher Luftfahrzeuge (30) der Flotte vom Datenbanksystem (11) lädt und auf dem Datenladegerät (14) speichert, wobei das Datenladegerät (14) über einen Bildschirm und Eingabegeräte für einen Bediener verfügt, wobei das Datenladegerät (14) mit dem Datenbus (33) des Luftfahrzeugs (30) über eine kabelgebundene Datenbusverbindung (36) verbunden wird, wobei die über den Anschluss in den Datenbus (33) eines Luftfahrzeugs (30) zu ladende jeweilige Softwarekonfiguration (12) über eine Benutzeroberfläche des Datenladegeräts (14) von einem Bediener ausgewählt wird, wobei die Datenübertragung durch den Bediener gestartet wird.

## Claims

1. Aircraft (30) and data-loading (10) system for loading software configurations (12) into electronic components (38, 39, 40, 41, ...) of aircraft, wherein the data-loading system (10) comprises a database system (11), a ground-based storage position (13) and at least a transportable data-loading device (14), wherein on the database system (11) software configurations (12) are stored for at least one fleet of corresponding aircraft (30), wherein the data-loading device (14) is configured to load an assigned software configuration obtained from the database system (11) via a connection into a data bus (33) of an aircraft (30) corresponding to said software configuration (12), **characterized in that** the data-loading device (14) is configured to load the latest individual software configurations (12) of all of the aircraft (30) of the fleet from the database system (11) in a ground-based storage position (13) via a data connection (16) and store them on the data-loading device (14), wherein the data-loading device (14) has a screen and input devices for an operator, wherein the data-loading device (14) is connected with the data bus (33) of the aircraft (30) via a cable-connected data bus connection (36), wherein the respective software configuration (12) to be loaded via the connection into the data bus (33) of an aircraft (30) can be selected by an operator via an user interface of the data-loading device (14), wherein the data transfer can be started by the operator.

2. Aircraft (30) and data-loading system (10) according to claim 1, **characterized in that** the data-loading device (14) is configured to identify an aircraft (30) when it is connected to a data bus (33) of said aircraft (30).

3. Aircraft (30) and data loading system (10) according to any of the preceding claims, **characterized in that** the data-loading device (14) is configured, in the storage position (13), to transmit an automatic feedback response about implemented loading procedures of software configurations (12) to the database system (11).

4. Aircraft (30) and data loading system (10) according to any of the preceding claims, **characterized in that** the data-loading device (14) is configured to periodically load the latest individual software configurations (12) of all of the aircraft (30) of the fleet from the database system (11) via the data connection (16).

5. Aircraft (30) and data-loading system (10) according to claim 4, **characterized in that** the interval for loading the latest individual software configurations (12) of all of the aircraft (30) of the fleet is adjustable.

6. Aircraft (30) and data-loading system (10) according to any of the preceding claims, **characterized in that** all of the data connections (16) and/or data bus connections (36) between the database system (11), data-loading device (14) and data bus (33) of the aircraft (30) are in the form of cable connections.

7. Aircraft (30) and data-loading system (10) according to any of the preceding claims, **characterized in that** the data-loading system (10) is configured to transmit a software configuration (12) from the transportable data-loading device (14) via a data transfer connection (46) through a data loader (42) installed into an aircraft (30) into a data bus (33) of said aircraft (30).

8. Aircraft (30) and data-loading system (10) according to any of the preceding claims, **characterized in that** a ground-based software management system for the database system (11) comprises an electronic configuration check of the software configuration (12) of aircraft (30).

9. Data-loading method for loading software configurations (12) into the electronic components (38, 39, 40, 41,...) of aircraft (30) by using an aircraft (30) and a data-loading system (10) according to any of the preceding claims, wherein on the database system (11) software configurations (12) for at least one fleet of aircraft (30) are stored, and the data-loading device (14) loads an assigned software configuration (12) obtained from the database system (11) via a connection into a data bus (33) of an aircraft (30) corresponding to said software configuration (12), **characterized in that** the the data-loading device (14) loads in a ground-based storage position (13) the latest individual software configurations (12) of all of the aircraft (30) of the fleet from the database system (11) via a data connection (16) and stores them on the data-loading device (14), wherein the data-loading device (14) has a screen and input devices for an operator, wherein the data-loading device (14) is connected with the data bus (33) of the aircraft (30) via a cable-connected data bus connection (36), wherein the respective software configuration (12) to be loaded via the connection into the data bus (33) of an aircraft (30) is selected by an operator via an user interface of the data-loading device (14), wherein the data transfer is started by the operator.

## Revendications

1. Aéronef (30) et système de chargement des données (10) pour le chargement de configurations logicielles (12) dans les composants électroniques (38, 39, 40, 41, ... ) d'aéronefs (30), dans lequel le système de chargement de données (10) comprend un système de base de données (11), une position de stockage au sol (13) et au moins un dispositif de chargement de données transportable (14), dans lequel des configurations logicielles (12) pour au moins une flotte d'aéronefs correspondants (30) sont stockées sur le système de base de données (11), dans lequel le dispositif de chargement de données (14) est conçu pour charger une configuration logicielle associée (12) obtenue à partir du système de base de données (11) via une connexion dans un bus de données (33) d'un aéronef (30) correspondant à cette configuration logicielle (12), **caractérisés en ce que** le dispositif de chargement de données (14) est conçu pour, à une position de stockage au sol (13), charger les configurations logicielles individuelles actuelles (12) de tous les aéronefs (30) de la flotte à partir du système de base de données (11) via une liaison de données (16) et pour les stocker sur le dispositif de chargement de données (14), dans lequel le dispositif de chargement de données (14) dispose d'un écran et de dispositifs de saisie pour un opérateur, dans lequel le dispositif de chargement de données (14) peut être relié au bus de données (33) de l'aéronef (30) via une liaison de bus de données câblée (36), dans lequel la configuration logicielle respective (12) à charger dans le bus de données (33) d'un aéronef (30) via la connexion peut être sélectionnée par un opérateur par l'intermédiaire d'une interface utilisateur du dispositif de chargement de données (14), dans lequel la transmission de données peut être démarrée par l'opérateur.

2. Aéronef (30) et système de chargement de données (10) selon la revendication 1, **caractérisés en ce que** le dispositif de chargement de données (14) est conçu pour identifier un aéronef (30) lorsqu'il est connecté à un bus de données (33) de cet aéronef (30).

3. Aéronef (30) et système de chargement de données (10) selon l'une des revendications précédentes, **caractérisés en ce que** le dispositif de chargement de données (14) est conçu pour, dans la position de stockage (13), transmettre une information en retour automatique sur les opérations de chargement effectuées de configurations logicielles (12) au système de base de données (11).

4. Aéronef (30) et système de chargement de données (10) selon l'une des revendications précédentes, **caractérisés en ce que** le dispositif de chargement de données (14) est conçu pour effectuer périodiquement le chargement des configurations logicielles individuelles actuelles (12) de tous les aéronefs (30) de la flotte à partir du système de base de données (11) via la liaison de données (16).

5. Aéronef (30) et système de chargement de données (10) selon la revendication 4, **caractérisés en ce que** l'intervalle de chargement des configurations logicielles individuelles actuelles (12) de tous les aéronefs (30) de la flotte est réglable.

6. Aéronef (30) et système de chargement de données (10) selon l'une des revendications précédentes, **caractérisés en ce que** toutes les liaisons de données (16) ou liaisons de bus de données (36) entre le système de base de données (11), le dispositif de chargement de données (14) et le bus de données (33) de l'aéronef (30) sont réalisées sous la forme de liaisons par câble.

7. Aéronef (30) et système de chargement de données (10) selon l'une des revendications précédentes, **caractérisés en ce que** le système de chargement de données (10) est conçu pour transmettre une configuration logicielle (12) du dispositif de chargement de données transportable (14) via une liaison de transfert de données (46) par un chargeur de données (42) installé dans un aéronef (30) dans un bus de données (33) de cet aéronef (30).

8. Aéronef (30) et système de chargement de données (10) selon l'une des revendications précédentes, **caractérisés en ce qu'**un système de gestion de logiciel au sol pour le système de base de données (11) comprend un contrôle de configuration électronique de la configuration logicielle (12) d'aéronefs (30).

9. Procédé de chargement de données pour le chargement de configurations logicielles (12) dans les composants électroniques (38, 39, 40, 41,... ) d'aéronefs (30) en utilisant un aéronef (30) et un système de chargement de données selon les revendications précédentes, dans lequel des configurations logicielles (12) pour au moins une flotte d'aéronefs (30) sont stockées dans le système de base de données (11), et le dispositif de chargement de données (14) charge une configuration logicielle associée (12) obtenue à partir du système de base de données (11) via une connexion dans un bus de données (33) d'un aéronef (30) correspondant à cette configuration logicielle (12), **caractérisé en ce que** le dispositif de chargement de données (14), à une position de stockage (13) au sol, charge les configurations logicielles individuelles actuelles (12) de tous les aéronefs (30) de la flotte à partir du système de base de données (11) via une liaison de données (16) et les stocke sur le dispositif de chargement de données (14), dans lequel le dispositif de chargement de données (14) dispose d'un écran et de dispositifs de saisie pour un opérateur, dans lequel le dispositif de chargement de données (14) est relié au bus de données (33) de l'aéronef (30) via une liaison de bus de données câblée (36), dans lequel la configuration logicielle respective (12) à charger dans le bus de données (33) d'un aéronef (30) via la connexion est sélectionnée par un opérateur par l'intermédiaire d'une interface utilisateur du dispositif de chargement de données (14), dans lequel la transmission de données est démarrée par l'opérateur.
